# NEUE EUROPÄISCHE PATENTSCHRIFT

(11) **EP 0 653 470 B2**
(45) Veröffentlichungstag und Bekanntmachung des Hinweises auf die Entscheidung über den Einspruch: **02.10.2002**
(45) Hinweis auf die Patenterteilung: 27.01.1999
(21) Anmeldenummer: 94117892.3
(22) Anmeldetag: 12.11.1994
(51) Int. Cl.: C09D 175/04, C09D 151/08

(54) **Physikalisch trocknende Überzugsmittel auf wässriger Basis und deren Verwendung**
Physically drying water-borne coating composition and its use
Composition de revêtement séchant physiquement à base aqueuse et leur utilisation

(30) Priorität: 16.11.1993 DE 4339085
(43) Veröffentlichungstag der Anmeldung: 17.05.1995
(73) Patentinhaber: E.I. DU PONT DE NEMOURS AND COMPANY, Wilmington Delaware 19898 (US)
(72) Erfinder: Brock, Thomas, Dr., D-50354 Hürth (DE); Wandelmaier, Klaus, Dr., D-42111 Wuppertal (DE)
(74) Vertreter: Gille Hrabal Struck Neidlein Prop Roos

(56) Entgegenhaltungen:
- EP-A- 0 512 523
- EP-A- 0 512 524
- EP-A- 0 522 419
- Organikum, 15. Auflage, S. 257

## Beschreibung

Die Erfindung betrifft pysikalisch trocknende Überzugsmittel auf wäßriger Basis, die insbesondere für uni- oder metallicfarbene Basisschichten von Mehrschichtlackierungen geeignet sind.

Wäßrige Überzugsmittel sind zur Herstellung von Basisschichten mehrschichtiger Überzüge bekannt. Beispielsweise werden in der EP-A-0 089 497 wasserverdünnbare Überzugsmittel auf der Basis von Polyurethandispersionen beschrieben, die nach einem bestimmten Aufbauverfahren aus Polyetherdiolen und/oder Polyesterdiolen, Diisocyanaten, Verbindungen mit zwei gegenüber Isocyanat reaktiven Gruppen und mindestens einer anionischen Gruppe, Diund/oder Polyaminen, hergestellt werden. Derartige Überzugsmittel werden, gegebenenfalls nach Überschichtung mit einem Decklack, bei erhöhter Temperatur von beispielsweise 130 bis 150°C eingebrannt.

In Industrie und Gewerbe besteht jedoch auch ein Bedürfnis nach physikalisch trocknenden Überzugsmitteln, die insbesondere zur Reparaturlackierung von verschiedenen Substraten, wie Metallgegenständen, insbesondere auf dem Kraftfahrzeugsektor oder zur Lackierung von Maschinen geeignet sind. Für derartige Zwecke sind Überzugsmittel erforderlich, die bei Raumtemperatur oder bei geringfügigem Erwärmen, beispielsweise auf bis zu 60°C, trocknen bzw. härten.

Derartige physikalisch trocknende Überzugsmittel auf wäßriger Basis, die beispielsweise für Reparaturlackierungen von Kraftfahrzeugen geeignet sind, sind bekannt, beispielsweise aus der DE-A-41 15 015 und der DE-A-41 15 042. Die hier beschriebenen Überzugsmittel auf der Basis von Polyurethanbindemitteln zeigen jedoch im Mehrschichtaufbau noch Nachteile im Vergleich zu konventionellen lösemittelhaltigen Basislacken. Insbesondere wird eine nur ungenügende Härte des Gesamtaufbaus erreicht.

Weiterhin werden in der DE-A-41 22 265 Polyurethan-Dispersionen beschrieben, die nach Überführung in die wäßrige Phase zur Herstellung von Metallic- und Unibasislacken geeignet sind. Nachteile dieser Überzugsmittel ist vor allem die unzureichende Härte im Mehrschichtaufbau und eine unter den Bedingungen der Fahrzeugreparaturlakkierung erreichbare zu geringe Wasserfestigkeit.

In der DE-A-39 36 794 werden Polyurethanpolyharnstoffe sowie ihre Verwendung als Bindemittel in wäßrigen Metallic-Basislacken beschrieben. Das Bindemittel enthält chemisch eingebaute Carbonatgruppierungen. Basislacke auf dieser Grundlage zeigen jedoch im Vergleich zu Basislacken auf Lösemittelbasis eine mangelhafte Härte im Gesamtaufbau, insbesondere beim Überlackieren mit konventionellen Klarlacken.

Aufgabe der Erfindung ist die Bereitstellung eines Bindemittelsystems für physikalisch trocknende Überzugsmittel auf wäßriger Basis, welche insbesondere als Basislack im Mehrschichtaufbau die Eigenschaften konventioneller Basislacke (auf Lösemittelbasis), insbesondere bezüglich Härte und Wasserfestigkeit, erreichen, und damit bekannten wäßrigen Systemen überlegen sind.

Diese Aufgabe wird gelöst durch ein Bindemittel auf wäßriger Basis, bei dem es sich um ein Gemisch handelt aus
A) 5 bis 50 Gew.-% eines oder mehrerer, Carbonatgruppierungen enthaltender Polyurethane mit einem Zahlenmittel der Molmasse (Mn) von 70000 - 500000, in Form einer wäßrigen Dispersion, erhältlich durch Umsetzung von
   a) 10 bis 40 Gew.-% eines oder mehrerer organischer Polyisocyanate, die diphatische, cycloaliphatische und/oder aromatische Polyisocyanate mit mindestens 2 NCO Gruppen pro Molekül und Mn = 112 - 1,000 besitzen und die keine hydrophilen oder in hydrophile Gruppen überführbare Gruppen aufweisen,
   b) 40 bis 80 Gew.-% einer oder mehrerer höhermolekularer organischer Polyhydroxyverbindungen die zumindest zu 50 Gew.-% aus einem oder mehreren Polyhydroxypolycarbonaten bestehen und die keine hydrophilen oder in hydrophile Gruppen überführbare Gruppen aufweisen,
   c) 0,2 bis 18 Gew.-% einer oder mehrerer niedermolekularer Hydroxyl und/oder Aminogruppen aufweisender Verbindungen mit Mn = 60 - 400, die keine hydrophilen oder in hydrophile Gruppen überführbare Gruppen aufweisen,
   d) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen, und
   e) 0 bis 8 Gew.-% einer oder mehrerer nicht-ionisch hydrophiler Verbindungen, die mindestens eine Isocynatgruppe oder mindestens eine gegenüber Isocyanatgruppen reaktionsfähige Gruppe aufweisen, und
B) 50 bis 95 Gew.-% eines oder mehrerer Polyurethane mit einem Zahlenmittel der Molmasse (Mn) von 30000 bis 500000, in Form einer wäßrigen Dispersion,
   erhältlich durch radikalisch initiierte Polymerisation von einem oder mehreren Polyurethan-Makromonomeren mit einem Gehalt an Carboxyl-, Phosphonsäure- und/oder Sulfonsäuregruppen und lateralen Vinylgruppen, in Gegenwart eines oder mehrerer mit dem Polyurethan-Makromonomer copolymerisierbaren ungesättigten Monomeren,
wobei sich die Gew.-% der Komponenten A) und B) jeweils auf den Bindemittelfestkörper beziehen und auf 100 Gew.-% addieren.

Die Erfindung betrifft auch wäßrige Überzugsmittel, enthaltend
8 bis 20 Gew.-% eines oder mehrerer der erfindungsgemäßen Bindemittel,
60 bis 90 Gew.-% Wasser,
0 bis 15 Gew.-% eines oder mehrerer organischer Lösemittel.
0,1 bis 20 Gew.-% eines oder mehrerer Effektpigmente und/oder farbgebender Pigmente,

Neutralisationsmittel zur Erzielung eines Neutralisationsgrades der neutralisierbaren Gruppen des Bindemittels von 40 bis 120 % sowie gegebenenfalls übliche Additive und Hilfsstoffe.

Die erfindungsgemäßen Überzugsmittel enthaften als Bindemittelkomponente A) ein oder mehrere Polyurethane, die Carbonatgruppierungen enthalten. Diese Polyurethane können gegebenenfalls auch Harnstoffgruppierungen enthalten, so daß es sich auch um Polyurethanharnstoffe handeln kann.

Bevorzugt weisen die Komponente A) eingesetzten Polyurethane mindestens 200 Milliäquivalente pro 100 g Feststoff an chemisch eingebauten Carbonatgruppierungen -O-CO-O- auf. Sie enthalten bevorzugt nicht mehr als insgesamt 320 Milliäquivalent pro 100 g Feststoff an chemisch eingebauten Urethangruppierungen -NH-CO-O und gegebenenfalls chemisch eingebauten Harnstoffgruppierungen -NH-CO-NH-. Beispiele für derartig verwendbare Polyurethane sind in der DE-A-39 36 794 beschrieben.

Die Komponente A) ist erhältlich durch Umsetzung der vorstehend definierten Komponenten a), b), c), d), gegebenenfalls e). Die Komponente a) wird in einer Mengevon 10 bis 40 Gew-%, bevorzugt 15 bis 35 Gew.-%, jeweils bezogen auf den Festkörpergehalt der Komponente A), eingesetzt. Als typische Beispiele der verwendbaren organischen Polyisocyanate können multifunktionelle Isocyanate verwendet werden, wie aliphatische, cycloaliphatiche und/oder aromatische Polyisocyanate mit mindestens zwei Isocyanatgruppen pro Molekül und einer Molmasse von 112 bis 1000, vorzugsweise 140 bis 400. Sie enthalten als funktionelle Gruppe bevorzugt zwei Isocyanatgruppen, die im Molekül asymmetrisch oder symmetrisch angeordnet sind. Bevorzugt werden die Isomeren oder Isomerengemische von organischen Diisocyanaten. Als aromatische Diisocyanate eignen sich Phenylendiisocyanat, Toluylendiisocyanat, Xylylendiisocyanat, Biphenylendiisocyanat, Naphthylendiisocyanat und Diphenylmethandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat sowie die Hydrierungsprodukte der aromatischen Diisocyanate wie Cyxlohexylendiisocyanat, Methylcyclohexylendiisocyanat und Dicyclohexyl-methandiisocyanat. Aliphatische Diisocyanate sind Verbindungen der Formel

O = C = N - (CR₂)ᵣ - N = C = O

worin r eine ganze Zahl von 2 bis 20, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen, darstellt. Beispiele hierfür sind Trimethylendiisocyanat, Tetramethylendiisocyanat, Pentamethylendiisocyanat, Hexamethylendiisocyanat, Propylendiisocyanat, Dimethylethylendiisocyanat, Methyltrimethylendiisocyanat und Trimethylhexandiisocyanat. Auch aliphatische Diisocyanate mit aromatischem Kern, wie z.B. Tetramethylxylylendiisocyanat können eingesetzt werden. Besonders bevorzugt werden als Diisocyanate Isophorondiisocyanat und Dicyclohexyl-methandiisocyanat. Die zur Bildung des Präpolymeren gebrauchte Polyisocyanat-Komponente kann auch einen Anteil höherwertiger Polyisocyanate enthalten, vorausgesetzt, sie wird nicht durch Gelbildungen beeinträchtigt. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanat oder das Addukt von Isophorondiisocyanat an Trimethylolpropran.

Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die zur Herstellung der Bindemittelkomponente A) verwendete Komponente b) wird in Mengen von 40 bis 80 Gew.-%, bevorzugt 45 bis 75 Gew.-%, jeweils bezogen auf den Gesamt-Festkörper der Komponente A), eingesetzt. Bei der Komponente b) handelt es sich vorzugsweise um organische Polyhydroxylverbindungen mit einer Molmasse von 300 bis 5000, vorzugsweise 500 bis 3000, wobei sich die Komponente b) zumindest zu 50 Gew.-%, vorzugsweise zu mehr als 70 Gew.-% aus Polyhydroxypolycarbonaten dieses Molekulargewichtsbereichs zusammensetzt. Unter diesen erfindungswesentlichen Aufbaukomponenten sind Ester der Kohlensäure zu verstehen, die durch Reaktion von Kohlensäurederivaten, z.B. Diphenylcarbonat oder Phosgen, mit Diolen erhalten wurde. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3 ferner Diethylenglykol, Tri- und Tetraethylenglykol, Dipropylenglykol, Polypropylenglykol, Dibutylenglykol, Polybutylenglykole, Bisphenol A, Tetrabromisphenol A in Frage. Vorzugsweise enthält die Diolkomponente 40 bis 100 Gew.-% Hexandiol, vorzugsweise Hexandiol-1,6 und/oder Hexandiol-Derivate, vorzugsweise solche, die neben endständigen OH-Gruppen Ether- oder Estergruppen ausweisen, z.B. Produkte, die durch Umsetzung von 1 Mol Hexandiol mit≥1 Mol, bevorzugt 1 bis 2 Mol Caprolacton gemäß DE-AS 17 70 245, oder durch Veretherung von Hexandiol mit sich selbst zum Di- oder Trihexylenglykol erhalten wurden. Die Herstellung solcher Derivate ist z.B. aus DE-AS 15 70 540 bekannt. Auch die in DE-A-37 17 060 beschriebenen Polyether-Polycarbonatdiole können sehr gut eingesetzt werden.

Die Hydroxylpolycarbonate sollen im wesentlichen linear sein. Sie können jedoch gewünschtenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylpropan, Pentaerythrit, Chinit, Mannit und Sorbit, Methylglykosid, 1,4,3,6-Dianhydrohexite.

Neben diesen Polyhydroxypolycarbonaten kann die Aufbaukomponente b) auch andere, aus der Polyurethanchemie an sich bekannte Polyhydroxylverbindungen des genannten Molekulargewichtsbereichs enthalten, wie z.B.
1. die in der Polyurethanchemie an sich bekannten Dihydroxypolyester aus Dicarbonsäuren, z.B. Bernsteinsäure, Adipinsäure, Korksäure, Azelainsäure, Sebacinsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder die verschiedenen isomeren Bishydroxymethylcyclohexane;
2. die in Polyurethanchemie an sich bekannten Polylactone, wie z.B. die auf den oben genannten zweiwertigen Alkoholen gestarteten Polymerisate des epsilon-Caprolactons;
3. die in der Polyurethanchemie an sich bekannten Polyether, wie z.B. die unter Verwendung von zweiwertigen Startermolekülen, wie Wasser, den oben genannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an Ethylenoxideinheiten enthält.

Vorzugsweise werden solche Polyetherdiole mitverwendet, die ohne Mitverwendung von Ethylenoxid, das heißt insbesondere unter ausschließlicher Verwendung von Propylenoxid und Tetrahydrofuran erhalten wurden.

Bei der Herstellung der Bindemittelkomponente A) wird die Komponente c) mitverwendet. Dies erfolgt in Mengen von 0,2 bis 18 Gew.-%, bevorzugt von 0,5 bis 10 Gew.-%, bezogen auf den Festkörper der Komponente A). Bei der mitzuverwendenden Komponente c) handelt es sich um die aus der Polyurethanchemie an sich bekannten niedermolekularen mindestens difunktionellen Hydroxyl- und/oder Aminogruppen aufweisenden Verbindungen mit Molmassen von 60 bis 400. Sie dienen während der Isocyanataddition als Kettenverlängerer (beim Einsatz difunktioneller Verbindungen) oder als Vernetzer (beim Einsatz von trifunktionellen oder mehrfunktionellen Verbindungen) und sind so aufgebaut, daß die funktionellen Gruppen über aliphatische, alicyclische oder aromatische Reste verbunden sind. Beispielsweise können Mengen bis zu 30 Gew.-% der gesamten Polyol-Bestandteile, vorzugsweise etwa 2 bis 20 Gew.-% eingesetzt werden. Im folgenden sind Beispiele für verwendbare niedermolekulare Polyole und Polyamine angegeben.

Vorteilhaft haben die niedermolekularen Polyole bis zu etwa 20 Kohlenstoffatome im Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen.

Polyamine sind im wesentlichen Alkylen-Polyamine mit 1 bis 30 Kohlenstoffatomen, vorzugsweise etwa 2 bis 12 Kohlenstoffatomen. Sie können Substituenten tragen, die keine mit Isocyanat-Gruppen reaktionsfähigen Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1,4-Butylendiamin, Piperazin, 1,4-Cyclohexyldimethylamin, Hexamethylendiamin,-1,6, Trimethylhexamethylendiamin, Methandiamin, Isophorondiamin, 4,4'-Diaminodicyclohexylmethan und Aminoethylethanolamin. Bevorzugte Diamine sind Alkyl- oder Cycloalkyldiamine wie Propylendiamin und 1-Amino-3-aminomethyl-3,5,5-trimethylcyclohexan. Die Kettenverlängerung kann auch mit Hydrazin erfolgen. Neben dem Hydrazin können die Ketten auch mit substituierten Hydraziden, wie Monoalkyl- oder Monoacrylhydrazid oder Bishydraziden, wie beispielsweise Adipinsäure-bis-hydrazid, verlängert werden.

Die Kettenverlängerung kann wenigstens teilweise mit einem Polyamin erfolgen, das mindestens drei Amingruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind die Alkyl- oder Cycloalkyltriamine wie Diethylentriamin. Um ein Gelieren bei der Kettenverlängerung zu verhindern, können auch kleine Anteile von Monoaminen wie Ethylhexylamin zugesetzt werden.

Die zur Herstellung der Bindemittelkomponente A) verwendete Komponente d) wird in Mengen von 1 bis 12 Gew-%, bevorzugt 1,5 bis 6 Gew.-% eingesetzt. Bei der Komponente d) handelt es sich um Verbindungen, die zwei mit Isocyanatgruppen reagierenden H-aktive Gruppen und mindestens eine zur Anionenbildung befähigte Gruppe enthalten. Geeignete mit Isocyanatgruppen reagierende Gruppen sind insbesondere Hydroxylgruppen, sowie primäre und/oder sekundäre Aminogruppen. Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Bevorzugt werden Alkansäuren mit zwei Substituenten am alpha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben 2 bis etwa 25, vorzugsweise 3 bis 10 Kohlenstoffatome. Beispiele für solche Verbindungen sind Dihydroxypropionsäure und Dihydroxybenzoesäure. Eine besonders bevorzugte Gruppe von Dihydroxyalkansäuren sind die alpha,alpha-Dimethylolalkansäuren, die durch die Strukturformel 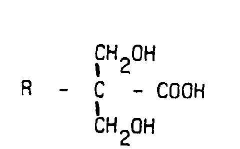 gekennzeichnet sind, worin R = Wasserstoff oder eine Alkylgruppe mit bis zu etwa 20 Kohlenstoffatomen bedeutet. Beispiele für solche Verbindungen sind 2,2-Dimethylolessigsäure, 2,2-Dimethylolbuttersäure und 2,2,-Dimethylolpentansäure. Die bevorzugte Dihydroxyalkansäure ist 2,2-Dimethylolpropionsäure. Aminogruppenhaltige Verbindungen sind beispielsweise alpha,beta-Diaminovalerinsäure, 3,4-Diaminobenzoesäure, 2,4-Diaminotoluolsulfonsäure und 2,4-Diamino-diphenylethersulfonsäure. Das Carboxylgruppen enthaltende Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppen-Neutralisation in Salzform verfügbare Menge an ionisierbaren Carboxylgruppen 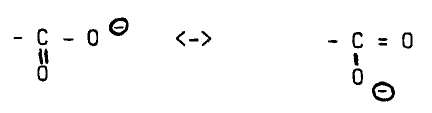 beträgt in dem fertigen Polyurethan im allgemeinen wenigstens 0,4 Gew.-%, vorzugsweise wenigstens 0,17 Gew.-%, bezogen auf den Feststoff. Die obere Grenze beträgt etwa 6 Gew.-%. Die Menge an Dihyroxyalkansäuren im fertigen neutralisierten Polyurethan entspricht einer Säurezahl von wenigstens 5, vorzugsweise wenigstens 10. Die obere Grenze der Säurezahl liegt bei 60, vorzugsweise bei 40, bezogen auf den Feststoff.

Die Menge der Komponente d) und der Neutralisationsgrad der mit der Komponente d) eingebauten ionischen Gruppen wird so bemessen, daß in dem letztendlich erhaltenen Polyurethan 0 bis 120, vorzugsweise 1 bis 80 Milliäquivalent pro 100 g Feststoff an ionischen Gruppen vorliegen, wobei die Gesamtmenge der Ethylenoxideinheiten und der ionischen Gruppen innerhalb der genannten Bereiche so bemessen sein muß, daß die Dispergierbarkeit der Polyurethanpolyharnstoffe in Wasser gewährleistet ist.

Zum Aufbau der Bindemittelkomponente A) kann gegebenenfalls auch die Komponente e) verwendet werden; bevorzugt werden dazu Mengen von 0 bis 8 Gew.-%, besonders bevorzugt 0,5 bis 6 Gew.-%, bezogen auf den Festkörper der Komponente A), eingesetzt.

Bei den hydrophilen Aufbaukomponenten e) handelt es sich um innerhalb von Polyetherketten eingebaute Ethylenoxideinheiten aufweisende Verbindungen, und zwar um
e1) Diisocyanate und/oder im Sinne der Isocyanatpolyadditionsreaktion difunktionelle Verbindungen mit gegenüber Isocyanatgruppen reaktionsfähigen Wasserstoffatomen mit seitenständigen, Ethylenoxid-Einheiten aufweisenden Polyetherketten,
e2) Monoisocyanate und/oder im Sinne der Isocyanat-Polyadditionsreaktion monofunktionelle Verbindungen mit gegenüber Isocyanat-gruppen reaktionsfähigen Wasserstoffatomen mit Ethylenoxideinheiten aufweisenden Polyetherketten oder um Gemische von Verbindungen e1) und e2).

Die im erfindungsgemäß verwendeten Bindemittel eingesetzte Komponente A) weist ein Zahlenmittel der Molmasse (Mn) von 70000 bis 500000, bevorzugt von 80000 bis 300000 auf.

Bei der Komponente B) des erfindungsgemäß eingesetzten Bindemittels handelt es sich um ein oder mehrere Polyurethane, erhältlich durch radikalisch initiierte Polymerisation von Polyurethan-Makromonomeren mit einem Gehalt an Carboxyl-, Phosphonsäure oder Sulfonsäuregruppen und lateralen Vinylgruppen, beispielsweise in einem als Lösemittel dienenden, mit dem Polyurethan-Makromonomer copolymerisierbaren ungesättigten Monomeren, gegebenenfalls in Gegenwart weiterer copolymerisierbarer ungesättigter Monomere oder durch radikalisch initiierte Polymerisation der Polyurethan-Makromere in einem Gemisch aus Wasser und einem gegenüber Isocyanatgruppen inerten organischen Lösemittel, in Anwesenheit von mit den Polyurethan-Makromonomeren copolymerisierbaren ungesättigten Monomeren, und gegebenenfalls Abdestillation des organischen Lösemittels vor oder nach der radikalischen Polymerisation. Die Polyurethane liegen in Form wäßriger Dispersion vor.

Diese Polyurethandispersionen können auf verschiedene Weise hergestellt werden. Ein erster Weg besteht z.B. darin, daß ein Polyadditionsprodukt hergestellt wird durch Polyaddition von Polyhydroxy-Verbindungen aus der Gruppe Polyhydroxy-polyether, Polyhydroxy-polyester oder Polyhydroxypolycarbonate, weiterhin Polyhydroxycarbonsäuren, Dihydroxyphosphonsäuren oder Polyhydroxysulfonsäuren, sowie Polyisocyanaten und einem mindestens zwei Hydroxy- sowie mindestens eine Vinylgruppe enthaltenden Monomeren. Die Mengenverhältnisse der Reaktanten, insbesondere an Polyisocyanat, werden dabei so gewählt, daß ein Makromonomer mit terminalen Hydroxylgruppen entsteht. Dieses Makromonomer, das außerdem Carboxyl- oder Sulfonsäuregruppen und laterale Vinylgruppen enthält, wird nach Überführung in eine wässrige Dispersion über die Vinylgruppen mit copolymerisierbaren ungesättigten Monomeren und mit radikalbildenden Initiatoren polymerisiert unter Bildung der Polyurethan-Dispersion, wobei in diesem Fall das Polyurethan noch Hydroxylgruppen trägt.

Ein zweiter Weg besteht z.B. darin, im Gegensatz zum erstgenannten Weg das Mengenverhältnis an Polyisocyanat so zu wählen, daß ein Makromonomer mit terminalen Isocyanatgruppen entsteht. Die freien Isocyanatgruppen werden dann mit primären oder sekundären Aminen, Alkoholen oder Thioalkoholen umgesetzt. Das so modifizierte Makromonomer wird dann ebenfalls über die Vinylgruppen mit copolymerisierbaren ungesättigten Monomeren und mit radikalbildenden Initiatoren polymerisiert.

Ein dritter Weg besteht z.B. darin, daß, wie bei der zweiten Verfahrensvariante, ein Polyadditionsprodukt hergestellt wird durch Reaktion von Polyhydroxy-Verbindungen aus der Gruppe Polyhydroxy-polyether, Polyhydroxy-polyester oder Polyhydroxy-polycarbonate sowie Polyhydroxycarbonsäuren, Dihydroxyphosphonsäuren oder Polyhydroxysulfonsäuren und Polyisocyanaten und zusätzlich einem Monomeren, das mindestens eine Vinylgruppe und mindestens zwei Hydroxygruppen enthält. Auch hier wird ein Überschuß von Polyisocyanaten genommen, so daß das entstehende Makromonomer laterale Vinylgruppen, Carboxyl-, Phosphonsäure- bzw. Sulfonsäuregruppen sowie terminale Isocyanatgruppen besitzt. Dieses Makromonomer wird dann mit einem Monomeren umgesetzt, das außer einer Vinylgruppe noch eine Gruppe enthält, die mit Isocyanatgruppen reagiert, wie etwa die Hydroxyl-, Amino- oder Mercaptogruppe. Diese Monomeren können allein verwendet werden, es ist aber auch möglich, diese Monomeren im Gemisch mit primären oder sekundären Aminen, Alkoholen oder Thioalkoholen einzusetzen. Auf diese Weise erhält man ein Makromonomer, das laterale Vinylgruppen sowie terminale Vinylgruppen enthält. Dieses Makromonomer wird dann in der letzten Stufe ebenfalls über die Vinylgruppen mit copolymerisierbaren ungesättigten Monomeren und mit radikalbildenden Initiatoren polymerisiert.

Eine vierte Verfahrensvariante besteht z.B. darin, daß das Monomer, welches die Carboxyl-, Phosphonsäure- bzw. Sulfonsäuregruppe trägt, erst in das zuvor gebildete Makromonomer eingebaut wird. Bei dieser Verfahrensvariante wird zunächst ein Polyadditionsprodukt gebildet aus Polyhydroxy-polyethern, Polyhydroxy-polyestern oder Polyhydroxy-carbonaten, Polyisocyanaten und Monomeren, die sowohl mindestens eine Vinylgruppe als auch mindestens zwei Hydroxylgruppen enthalten. Auch hier wird ein molarer Überschuß an Polyisocyanat genommen, so daß das entstehende Makromonomer terminale Isocyanatgruppen enthält. Daneben enthält dieses Makromonomer dann noch laterale Vinylgruppen.

Zum anderen kann das gebildete Zwischenprodukt in der Kette verlängert werden, in dem die Isocyanatgruppen dieses Polyadditionsprodukts mit Diamincarbonsäuren oder Diaminsulfonsäuren umgesetzt werden. Auch hier erfolgt abschließend dann eine radikalisch initiierte Polymerisation der Vinylgruppen mit copolymerisierbaren ungesättigten Monomeren.

Bevorzugt arbeitet man in der Weise, daß man die Di-hydroxyvinylverbindung nicht gleichzeitig mit dem Polyol bei der Polyaddition einbaut, sondern in dem man zunächst ein Präpolymer allein aus Polyol, Polyisocyanat und gegebenenfalls Polyhydroxysäure zu einem OH- oder NCO-terminierten Präpolymeren umsetzt. In einer zweiten Stufe wird dieses Präpolymer dann mit der Di-hydroxyvinylverbindung und weiterem Polyisocyanat zu dem Vinylgruppen enthaltenden OH- oder NCO-terminierten Makromonomer umgesetzt.

Als Polyhydroxyl-polyether kommen Verbindungen der Formel

H - [-O-(CHR)ₙ-]ₘ OH

in Frage, in der
R Wasserstoff oder ein niedriger Aklylrest, gegebenenfalls mit verschiedenen Substituenten, ist
n eine Zahl von 2 bis 6 und
m eine Zahl von 10 bis 120 ist.

Beispiele sind Poly(oxytretramethylen)glykole, Poly(oxyethylen)glykole und Poly(oxypropylen)glykole. Die bevorzugten Polyhydroxy-polyether sind Poly(oxypropylen)glykole mit einem Molkekulargewicht im Bereich von 400 bis 5000.

Die Polyhydroxy-polyester werden hergestellt durch Veresterung von organischen Polycarbonsäuren oder ihren Anhydriden mit organischen Polyolen. Die Polycarbonsäuren und die Polyole können aliphatische oder aromatische Polycarbonsäuren und Polyole sein.

Die zur Herstellung verwendeten Polyole schließen Alkylenglykole wie Ethylenglykol, Butylenglykol, Neopentylglykol und andere Glykol wie Diethylolcyclohexan sowie Trishydroxyalkylalkane, wie zum Beispiel Trimethylolpropan und Tetrakishydroxyalkylalkane, wie zum Beispiel Pentaerythrit ein.

Die Säurekomponente des Polyesters besteht in erster Linie aus niedermolekularen Polycarbonsäuren oder ihren Anhydriden mit 2 bis 18 Kohlenstoffatomen im Molekül. Geeignete Säuren sind beispielsweise Phthalsäure, lsophthalsäure, Terephthalsäure, Tetrahydrophthalsäure, Hexahydrophthalsäure, Bernsteinsäure, Adipinsäure, Azelainsäure, Sebazinsäure, Maleinsäure, Glutarsäure, Hexachlorneptandicarbonsäure, Tetrachlorphthalsäure, Trimellitsäure und Pyromellitsäure. Anstelle dieser Säuren können auch ihre Anhydride, soweit diese existieren, verwendet werden. Als Polycarbonsäuren lassen sich auch Dimer- und Trimerfettsäuren einsetzen.

Als Ausgangsverbindungen kommen weiterhin Polycarbonatpolyole bzw. Polycarbonatdiole in Frage, die der allgemeinen Formel 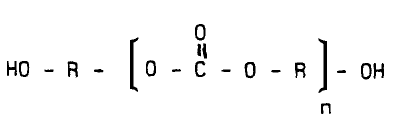 n = Anzahl der Einheiten, um das gewünschte Molekulargewicht zu erzielen,
entsprechen, worin R einen Alkylenrest bedeutet. Diese OH-funktionellen Polycarbonate lassen sich durch Umsetzung von Polyolen, wie Propandiol-1,3, Butandiol-1,4, Hexandiol-1,6, Diethylenglykol, Triethylenglykol, 1,4-bis-Hydroxy-methyl-cyclohexan, 2,2-bis(4-hydroxycyclohexyl)-Propan, Neopentylglykol, Trimethylolpropan, Pentaerythrit, mit Dicarbonaten wie Dimethyl-, Diethyl-, oder Diphenylcarbonat oder Phosgen herstellen. Gemische solcher Polyole können ebenfalls eingesetzt werden.

Es ist von besonderer Bedeutung für die Polyurethan-Dispersionen, daß die Makromonomeren, die zu diesen Dispersionen führen, laterale Vinylgruppen sowie gegebenenfalls auch terminale Vinylgruppen enthalten. Der Begriff terminale Vinylgruppen soll solche Vinylgruppen bezeichnen, die am Anfang oder Ende der Polymerkette hängen, laterale Vinylgruppen sind dagegen solche, die nicht am Anfang oder Ende der Polymerkette hängen, sondem dazwischen eingebaut sind.

Die lateralen Vinylgruppen in den Polyurethan-Dispersionen erhält man durch den Einbau von solchen Monomeren in das Makromonomer, die mindestens zwei Hydroxylgruppen und mindestens eine Vinylgruppe aufweisen. Beispiele hierfür sind Trimethylolpropan (TMP) derivate wie zum Beispiel TMP-Monoallylether (2-Propenyloxy-2-hydroxymethylpropanol), TMP-Mono (meth)acrylat (2-(Meth)acryloyloxy-2-hydroxymethylpropanol; Glycerinmono (meth)acrylat; Addukte von alpha, beta-ungesättigten Carbonsäuren, wie (Meth)acrylsäure, an Diepoxide, zum Beispiel Bisphenol-Adiglycidylether, Hexandioldigycidylether; Addukte von Dicarbonsäuren, wie zum Beispiel Adipinsäure, Terephthalsäure oder dgl. an (Meth)acrylsäure-glycidylester; Monovinylether von Polyolen.

Die Herstellung der Polyurethanmakromonomere erfolgt nach den üblichen und in der Urethan-Chemie bekannten Methoden. Hierbei können als Katalysatoren tertiäre Amine, wie zum Beispiel Triethylamin, Dimethylbenzylamin, Diazabicyclooctan sowie Dialkylkzinn (IV)-Verbindungen, wie zum Beispiel Dibutylzinndilaurat, Dibutylzinndichlorid, Dimethylzinndilaurat, eingesetzt werden. Die Reaktion findet insbesondere in Anwesenheit eines Lösemittels oder in Anwesenheit eines sogenannten Reaktivverdünners statt. Als Lösemittel kommen solche in Frage, die späterhin durch Destillation entfernt werden können, beispielsweise Methylethylketon, Methylisobutylketon, Aceton, Tetrahydrofuran, Toluol, Xylol. Diese Lösemittel können ganz oder teilweise nach der Herstellung der Polyurethan-Makromonomeren oder nach radikalischen Polymerisation abdestilliert werden. Daneben kann man auch wasserverdünnbare hochsiedende Lösemittel, zum Beispiel N-Methylpyrrolidon, einsetzen, die dann in der Dispersion verbleiben. Bei den Reaktivverdünnern handelt es sich um alpha, beta-ungesättigte Monomere, die in der Endstufe mit den Vinylgruppen enthaltenden Makromonomeren copolymerisiert werden. Beispiele für solche Reaktivverdünner sind alpha, beta-ungesättigte Vinylmonomeren wie Alkylacrylate, -methacrylate und -crotonate mit 1 bis 20 Kohlenstoffatomen im Alkylrest, Di-, Tri- und Tetracrylate, meth-acrylate, -crotonate von Glykolen, tri- und tetrafunktionelle Alkoholen, substituierte und unsubstituierte Acryl- und Methacrylamide, Vinylether, alpha, beta-ungesättigte Aldehyde und Ketone, Vinylalkylketone mit 1 bis 20 Kohlenstoffatomen im Alkylrest, Vinylether, Vinylester, Diester von alpha, beta-ungesättigten Dicarbonsäuren, Styrol, Styrolderivate, wie zum Beispiel alpha-Methylstyrol.

Die so erhaltenen Makromonomeren werden dann neutralisiert, falls die sauren Gruppen in den Monomeren, die solche Gruppen tragen, nicht bereits von vornherein in neutralisierter Form eingesetzt wurden.

Die Neutralisation erfolgt mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak. Daneben kann die Neutralisation auch mit Mischungen aus Aminen und Ammoniak vorgenommen werden.

Zur Herstellung der als Komponente B) eingesetzten Polyurethan-Dispersionen werden die erhaltenen Makromomoneren, die Vinylgruppen enthalten, durch Zugabe von Wasser in eine wäßrige Dispersion überführt und nach an sich bekannten Methoden durch radikalisch initiierte Polymersation polymerisiert. Bei dieser Polymerisation werden, falls nicht von vornherein als sogenannte Reaktivverdünner vorhanden, Monomere dieser Art, wie zuvor beschrieben, zugegeben, die dann in das Polyurethan mit einpolymerisiert werden.

Die Säurezahl dieser Polyurethan-Dispersionen liegen im Bereich von 5 bis 80 mg KOH/g, bevorzugt bei 10 bis 40 mg KOH/g. Das Zahlenmittel der Molmasse (Mn) liegt bei 30000 bis 500000, bevorzugt bei 50000 bis 250000.

Der Anteil der nicht aus dem Polyurethan-Makromonomeren stammenden Einheiten beträgt über 5 Gew.-%, bevorzugt über 15 Gew.-%, bezogen auf das Gewicht des fertigen Gesamtharzes.

Die erfindungsgemäßen Überzugsmittel enthalten 8 bis 20 Gew.-%, bezogen auf das gesamte Überzugsmittel, des die Komponenten A) und B) enthaltenden Bindemittels.

Der Wasseranteil der erfindungsgemäßen Überzugsmittel beträgt 50 bis 90 Gew.-%, bevorzugt 60 bis 85 Gew.-%. Zur Verbesserung der Rheologie der Filmbildung und des Metalliceffektes, können 1 bis 20 Gew.-%, bevorzugt 6 bis 15 Gew.-%, jeweils bezogen auf das gesamte Überzugsmittel, eines oder mehrerer Lösemittel enthalten sein.

Als Lösemittel kommen organische Lösemittel in Frage, wie sie beispielsweise auf dem Lacksektor als Lacklösemittel und/oder Zusätze zu wäßrigen Überzugsmitteln üblich sind.

Geeignet sind beispielsweise aromatische Lösemittel, wie Xylol, Ester, wie Butylacetat, Glykolether, wie Ethylenglykolmonobutylether (Butylglykol), Alkohole, wie Butanol, aliphatische Kohlenwasserstoffe, wie z.B. Testbenzin.

Die erfindungsgemäßen Überzugsmittel sind besonders geeignet zur Herstellung von Effekt- und perlmutt- oder unifarbenen Basislackschichten.

Beim Einsatz von Metallic-Pigmenten werden bevorzugt 0,3 bis 4 Gew.-% eines oder mehrerer Metallic-Pigmente, bezogen auf das gesamte Überzugsmittel, verwendet. Als Metallic-Pigmente kommen übliche Metallplättchen bzw. Metallschuppenpigmente in Frage, wie Metallbronzen, beispielsweise Aluminiumpigmente, wie Aluminiumbronzen.

Es können auch weitere Effektpigmente, zum Beispiel Interferenzpigmente wie titandioxidbeschichteter oder eisenoxidbeschichteter Glimmer, beschichtete Aluminium- oder Graphitpigmente eingesetzt werden.

Neben den Effektpigmenten können auch weitere farbgebende Pigmente im Überzugsmittel enthalten sein. Zur Herstellung unifarbener Lackschichten sind ausschließlich farbgebende Pigmente enthalten. Zu den Pigmenten sollen auch übliche anorganische oder organische Füllstoffe zählen, wie sie dem Fachmann auf dem Lackgebiet geläufig sind.

Beispiele für anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Diketo-pyrrolopyrrolpigmente.

Die erfindungsgemäßen Überzugsmittel enthalten Neutralisationsmittel zur teilweisen Neutralisation von neutralisierbaren Gruppen. Der Neutralisationsgrad neutralisierbarer Gruppen beträgt bevorzugt 40 bis 120 % der neutralisierbaren Gruppen und liegt bevorzugt unter 100 %.

Als Neutralisationsmittel für saure Gruppen kommen auf dem Lacksektor übliche Basen in Frage, wie die vorstehend angegebenen Amine, Ammoniak oder Alkanolamine, wie N,N-Dimethylethanolamin.

Die erfindungsgemäßen Überzugsmittel enthalten gegebenenfalls übliche Additive und Hilfsstoffe, wie sie auf dem Lacksektor eingesetzt werden. Derartige Hilfsmittel und Additive sind Verdicker, die Rheologie beeinflussende Zusätze, Antischaummittel, Verlaufsmittel, Inhibitoren (z.B. zur Inhibierung der Gasung von Aluminiumpigmenten), Dispergierund Netzadditive.

Die Addivite und Hilfsstoffe werden in üblichen, dem Fachmann geläufigen Mengen, je nach gewünschtem Effekt, zugesetzt.

Die erfindungsgemäßen Überzugsmittel können auf verschiedene Substrate nach üblichen Beschichtungsverfahren aufgebracht werden, beispielsweise durch Spritzen, Streichen oder Rakeln. Als Substrate kommen verschiedene Materialien in Frage, wie Metalle, Kunststoffe, jedoch auch Holz, Glas und andere Substrate.

Die erfindungsgemäßen Überzugsmittel sind physikalisch trocknend, das heißt sie erfordern kein Einbrennen und können beispielsweise bei Temperaturen in der Größenordnung von 15 bis 60°C getrocknet werden.

Die erfindungsgemäßen Überzugsmittel können nach dem Aufbringen mit Decklacken, insbesondere transparenten Decklacken, beschichtet werden. Die Beschichtung mit Decklacken kann naß-in-naß, nach kurzem Ablüften oder nach Trocknen der erfindungsgemäß erstellten Basis-Lackschicht erfolgen. Die Trockung der Decklackschicht kann gemeinsam mit der Lackschicht aus dem erfindungsgemäßen Überzugsmittel durchgeführt werden. Als Decklack kommen übliche, insbesondere transparente Lacke in Frage, wie sie beispielsweise auf dem Kraftfahrzeugsektor üblisch sind. Es handelt sich dabei vorwiegend um Lacke auf Lösungsmittelbasis, jedoch können auch Decklacke auf wässriger Basis verwendet werden.

Die erfindungsgemäßen Überzugsmittel können, wie vorstehend erwähnt, auf verschiedensten Substraten angewendet werden. Sie eignen sich besonders zur Herstellung von Basischichten in Mehrschicht-Lackaufbauten. Hier kommt als bevorzugtes Anwendungsgebiet die Lackierung von Kraftfahrzeugen bzw. Kraftfahrzeugteilen in Frage. Durch die günstige physikalische Trockung sind die erfindungsgemäßen Überzugsmittel besonders gut zur Herstellung von Reparaturlackierungen bzw. als Reparaturlack geeignet.

Sie können jedoch auch in Einbrennsystemen, wie sie beispielsweise in der Fahrzeugserienlackierung üblich sind, eingesetzt werden.

Im Vergleich zu anderen bekannten wäßrigen Überzugsmitteln, die als Basislack eingesetzt werden, werden mit den erfindungsgemäßen Überzugsmitteln im Mehrschichtaufbau sehr gute Härte des Gesamtaufbaus und hervorragende Wasserfestigkeit erreicht. Die hierdurch erzielten Eigenschaften sind vergleichbar mit denen lösemittelhaltiger Basislacke.

Die folgenden Beispiele sollen die Erfindung erläutem:

### Herstellungsbeispiel 1

### Polyurethandispersion A

Aus 850 Teilen eines Polycarbonats aus Hexandiol-1,6 (hergestellt durch die Reaktion von Hexandiol-1,6 und Diphenylcarbonat; Hydroxylzahl: 56, Molekulargewicht: ca. 2.000), 67,5 Teilen eines monofunktionellen Polyetheralkohols der OH-Zahl 26, hergestellt durch Alkoxylierung von n-Butanol unter Verwendung eines Gemisches aus 83 % Ethylenoxid und 17% Propylenoxid, 21,4 Teilen 2,2-Bishydroxymethylpropionsäure (DMPS) und 22,5 Teilen Butandiol-1,4 wird durch Umsetzung bei 100°C mit einem Gemisch aus 151,2 Teilen 1,6-Diisocyanatohexan (HDI) und 199,8 Teilen 3-lsocyanatomethyl-3,5,5-trimethylcyclohexylisocyanat (IPDI) ein Präpolymer gebildet, welches einen Gehalt an freien Isocyanatgruppen von etwa 5 % aufweist. Das Präpolymer wird in 2.440 Teilen Aceton aufgelöst; die Lösung wird auf 50°C abgekühlt.

Aus 19,8 Teilen Ethylendiamin und 7,5 Teilen Hydrazinhydrat wird eine Lösung in 500 Teilen Wasser zubereitet. Diese Lösung wird langsam unter gutem Rühren zu der Präpolymerlösung gegeben; dabei entsteht eine dünnflüssige, weißlich-trübe Lösung. Nun werden 13,4 Teile N,N-Dimethylethanolamin zugesetzt. Unter starken Rühren werden jetzt 1.525 Teile entionisisertes Wasser zugegeben, dabei bildet sich eine opake blau-weiße Dispersion des Festkörpers. Durch Destillation im Vakuum wird aus dieser Dispersion das Aceton entfernt; zurück bleibt eine rein wäßrige Dispersion, die 40 % Feststoff enthält.

Der Festkörper der Dispersion enthält (mEq-% = Milliäquivalentprozent pro 100 g Feststoff)
410 mEq-% Carbonatgruppen (-O-CO-O)
148 mEq-% Urethangruppen (-NH-CO-O-)
95 mEq-% Harnstoffgruppen (-NH-CO-NH)
243 mEq-% Urethan- und Harnstoffgruppen

### Herstellungsbeispiel 2

### Polyurethandispersion B

249,8 g eines Polyesters, hergestellt aus Neopentylglykol, Hexandiol-1,6, Isophthal- und Adipinsäure, mit einer Hydroxylzahl von 37 und einer Säurezahl unter 3 werden zusammen mit 24,7 g Dimethylolpropinsäure und 9,3 g Butandiol-1,4 in 150 g Aceton unter Rückfluß gelöst. Anschließend werden 0,1 g 2,6-Di-tert.-butyl-4-methylphenol und 16,6 g Glycerinmonomethacrylat zugegeben und homogenisiert. Nach Zugabe von 134,2 g Tetramethylxylylendiisocyanat wird bei Rückflußtemperatur so lange gerührt, bis der Isocyanatgehalt 1,08 Gew.-%, bezogen auf die Gesamteinwaage, beträgt.

In die so erhaltene Präpolymerlösung werden nun 15,5 g Diethanolamin rasch zugegeben und 30 Minuten homogenisiert. Nach Dosierung von 13,1 g Triethylamin werden 1108 g Wasser mit einer Temperatur von 80°C zu der Polymerlösung unter intensivem Rühren gegeben. Das Lösemittel Aceton wird anschließend durch Vakuumdestillation von der erhaltenen Dispersion abgetrennt. Nach Zugabe von 51,1 g Methylmethacrylat wird die Temperatur auf 80°C erhöht und weitere 30 Minuten gerührt. Anschließend werden 10 Vol.-% einer Ammoniumperoxidsulfat-Lösung, bestehend aus 0,8 g Ammoniumperoxidsulfat und 50 g Wasser, bei 80°C zugegeben. Die restliche Menge der Ammoniumperoxidsulfat-Lösung wird über einen Zeitraum von 30 Minuten dosiert. Die Temperatur wird für weitere zwei Stunden bei 78 bis 80°C gehalten.

Nach Abkühlung auf Raumtemperatur wird die Dispersion auf einen Festkörpergehalt von 30 % eingestellt und durch ein 5 mm Filter filtriert. Die resultierende Dispersion besitzt einen pH-Wert von 7,46.

### Herstellungsbeispiel 3

### Herstellung von Metallic-Wasserbasislacken

Aus den vorstehend hergestellten Dispersionen A und B werden wäßrige Metallic-Basislacke mit den folgenden Bestandteilen hergestellt.
25,5* Tle. Dispersion B + 10 Tle. Dispersion A
46,1* Tle. Wasser
7,2 Tle. n-Butanol
4,0 Tle. Butylglykol
0,5 Tle. N.-Methylpyrrolidon
0,3 Tle. eines handelsüblichen Korrosionsinhibitors zur Verhinderung der Aluminium-Gasung
2,1 Tle. eines handelsüblichen Verdickers
0,2 Tle. N,N-Dimethylethanolamin
4,1 Tle. einer handelsüblichen Aluminium-Paste, 60 % AI

* jeweils Dispersionen mit ca. 40 % Festkörper (FK); bei niedrigem FK werden die Dispersions- und Wassermengen entsprechend korrigiert, so daß jeweils gebrauchsfertige Überzugsmittel mit dem gleichen FK-Gehalt resultieren.

Die resultierenden Metallic-Basislacke zeigen eine Viskosität von ca. 30 s (DIN-Becher 4 mm-Düse, 23°C) und werden zum Erreichen der Spritzviskosität von ca. 20 s mit ca. 10 % Wasser verdünnt. Mit den Dispersionen werden Lackierungen wie folgt durchgeführt:
Lackieraufbau der bewerteten Bleche:
Blankgeschliffenes Karosserieblech
Praxisübliche 1K-Polyvinylbutyral-Grundierung
Praxisüblicher 2K-PU-Füller
Wasserbasislack
Praxisüblicher 2K-PU-Klarlack, Medium solid-Typ, FK 47 %

Es können jedoch auch wäßrige Haftgrundierungen und Füller verwendet werden.

Applikation und Trocknung der Decklackschicht (Basislack und Klarlack):
Spritzapplikation des Wasserbasislackes
30 min Vortrockung bei Raumtemperatur
Spritzapplikation des Klarlackes
10 min Ablüften bei Raumtemperatur
30 min Trocknung bei 60°C

Erläuterung:
Tle = Gewichtsteile
2K = Zwei Komponenten
PU = Polyurethan

### Herstellungsbeispiel 4

### Herstellung von Uni-Wasserbasislacken

Aus den vorstehend hergestellten Dispersionen A und B werden wäßrige Uni-Basislacke mit den folgenden Bestandteilen hergestellt:
35,5* Tle. der Dispersionen A und B
21,1* Tle. Wasser
12,1 Tle. Butylglykol
1,3 Tle. eines handelsüblichen Verdickers
0,14 Tle. N,N-Dimethylethanolamin
22,1 Tle. eines handelsüblichen Titandioxid-Pigmentes
0,5 Tle. eines handelsüblichen Kupferphthalocyanin-Pigmentes
0,16 Tle. eines handelsüblichen Entschäumers
8,1 Tle. eines handelsüblichen PU-Anreibehilfsmittels (FK 30 %)

* jeweils Dispersionen mit ca. 40 % Festkörper (FK); bei niedrigem FK werden die Dispersions- und Wassermengen entsprechend korrigiert, so daß jeweils gebrauchsfertige Überzugsmittel mit dem gleichen FK-Gehalt resultieren.

Die resultierenden Uni-Basislacke zeigen eine Viskosität von ca. 40 bis 50 sek. (DIN-Becher 4 mm-Düse, 23°C) und werden zum Erreichen der Spritzviskosität von ca. 20 sek. mit ca. 10 bis 15 % Wasser verdünnt.

Mit den Uni-Basislacken werden Lackierungen analog Herstellungsbeispiel 3 durchgeführt.

Zum Vergleich wird im entsprechenden beschriebenen Lackieraufbau ein handelsüblicher lösemittelhaltiger Basislack auf Basis Acrylat/Celluloseacetobutyrat appliziert.

Die Eigenschaften der erhaltenen Lackierungen sind in der folgenden Tabelle dargestellt:

| | Kratzfestigkeit 1) | | Härte 2) | Wasserfestigkeit | |
|---|---|---|---|---|---|
| | metallic | uni-weiß | uni-weiß | metallic | uni-weiß |
| Wasserbasislack auf Basis von: | | | | | |
| Dispersion A | 2-3 | 3 | 30 um | 1 | 1-2 |
| | | | | | |
| Dispersion B | 1 | 2 | 16 um | 2-3 | 3 |
| | | | | | |
| Dispersion A+B | 1-2 | 2 | 18 um | 1-2 | 2 |
| | | | | | |
| Lösemittelhaltiger Basislack | 1-2 | 2 | 15 um | 1-2 | 2 |

| | | | | | |
|---|---|---|---|---|---|
| 1) 1- sehr gut 2 - gut 3 - bedingt brauchbar 4 - unbrauchbar | | | | | |
| 2) Mikroeindringhärte nach Vickers bei 250 mN (Meßgerät HV 100 der Firma Fischer/Sindelfingen) | | | | | |

## Patentansprüche

1. Bindemittel geeignet für Überzugsmittel auf wäßriger Basis, enthaltend ein Gemisch aus
A) 5 bis 50 Gew.-% eines oder mehrerer, Carbonatgruppierungen enthaltender Polyurethane mit einem Zahlenmittel der Molmasse (Mn) von 70000 - 500000, in Form einer wäßrigen Dispersion, erhältlich durch Umsetzung von
a) 10 bis 40 Gew.-% eines oder mehrerer organischer Polyisocyanate, die aliphatische, cycloaliphatische und/oder aromatische Polyisocyanate mit mindestens zwei Isocyanatgruppen pro Molekül und eine Molmasse von 112 bis 1000 besitzen und die keine hydrophilen oder in hydrophile Gruppen überführbare Gruppen aufweisen,
b) 40 bis 80 Gew.-% einer oder mehrerer höhermolekularer organischer Polyhydroxylverbindungen, die zumindest zu 50 Gew.-% aus einem oder mehreren Polyhydroxypolycarbonaten bestehen und die keine hydrophilen oder in hydrophile Gruppen überführbare Gruppen aufweisen,
c) 0,2 bis 18 Gew.-% einer oder mehrerer niedermolekularer Hydroxyl- und/oder Aminogruppen aufweisender Verbindungen mit Molmassen von 60 - 400, die keine hydrophilen oder in hydrophile Gruppen überführbare Gruppen aufweisen,
d) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen, und
e) 0 bis 8 Gew.-% einer oder mehrerer nicht-ionisch hydrophiler Verbindungen, die mindestens eine Isocyanatgruppe oder mindestens eine gegenüber Isocyanatgruppen reaktionsfähige Gruppe aufweisen und
B) 50 bis 95 Gew.-% eines oder mehrerer Polyurethane mit einem Zahlenmittel der Molmasse (Mn) von 30000 bis 500000, in Form einer wäßrigen Dispersion,
erhältlich durch radikalisch initiierte Polymerisation von einem oder mehreren Polyurethan-Makromonomeren mit einem Gehalt an Carboxyl-, Phosphonsäure- und/oder Sulfonsäuregruppen und lateralen Vinylgruppen, in Gegenwart eines oder mehrerer mit dem Polyurethan-Makromonomeren copolymerisierbaren ungesättigten Monomeren,
wobei sich die Gew.-% der Komponenten A) und B) jeweils auf den Bindemittelfestkörper beziehen und auf 100 Gew.-% addieren.

2. Wäßriges Überzugsmittet, enthaltend als Bindemittel ein Gemisch nach Anspruch 1.

3. Wäßriges Überzugsmittel nach Anspruch 2, **dadurch gekennzeichnet, daß** es
8 bis 20 Gew.-% eines oder mehrerer der Bindemittel nach Anspruch 1,
60 bis 90 Gew.-% Wasser,
0 bis 15 Gew.-% eines oder mehrerer organischer Lösemittel,
0,1 bis 15 Gew.-% eines oder mehrerer Effektpigmente und/oder farbgebender Pigmente,
Neutralisationsmittel zur Erzielung eines Neutralisationsgrades der neutralisierbaren Gruppen des Bindemittels von 40 bis 120 % sowie gegebenenfalls übliche Additive und Hilfsstoffe enthält.

4. Verfahren zur Herstellung eines Mehrschichtüberzugs durch Auftrag einer uni- oder metallicfarbenen Basisschicht auf ein gegebenenfalls mit einem oder mehreren weiteren Überzügen vorbehandeltes Substrat und anschließenden Auftrag einer Klarlackschicht, **dadurch gekennzeichnet, daß** zur Herstellung der Basisschicht ein Überzugsmittel eines der Ansprüche 2 oder 3 verwendet wird.

5. Vertahren nach Anspruch 4, **dadurch gekennzeichnet, daß** die Klarlackschicht naß-in-naß auf die Basislackschicht aufgebracht und anschließend mit dieser gemeinsam getrocknet wird.

6. Verwendung der wäßrigen Überzugsmittel nach Anspruch 2 oder 3 zur Herstellung von Basisschichten in Mehrschicht-Lackaufbauten.

7. Verwendung nach Anspruch 6 bei der Lackierung von Kraftfahrzeugen oder Kraftfahrzeugteilen.

8. Verwendung der wäßrigen Überzugsmittel nach Anspruch 2 oder 3 zur Herstellung von Reparaturlackierungen.

## Claims

1. A binder vehicle which is suitable for coating media which have an aqueous basis, containing a mixture of 5
A) 5 to 50 % by weight of one or more polyurethanes which contain carbonate groups and which have a number average molecular weight (Mn) of 70,000 - 500,000, in the form of an aqueous dispersion, obtainable by the reaction of
a) 10 to 40 % by weight of one or more organic polyisocyanates, which comprise aliphatic, cycloaliphatic and/or aromatic polyisocyanates having at least two isocyanate groups per molecule and a molecular weight of 112 to 1000 and which do not contain hydrophilic groups or groups which can be converted into hydrophilic groups,
b) 40 to 80 % by weight of one or more higher molecular weight organic polyhydroxyl compounds, at least 50 % by weight of which consist of one or more polyhydroxy polycarbonates and which do not contain hydrophilic groups or groups which can be converted into hydrophilic groups,
c) 0.2 to 18 % by weight of one or more lower molecular weight compounds which contain hydroxyl and/or amino groups and which have molecular weights of 60-400, which do not contain hydrophilic groups or groups which ca be converted into hydrophilic groups,
d) 1 to 12 % by weight of one or more compounds, which in addition to at least one ionic group or at least one group which can be converted into an ionic group contain at least one hydrogen atom which is capable of reacting with isocyanate groups, and
e) 0 to 8 % by weight of one or more non-ionic, hydrophilic compounds, which contain at least one isocyanate group or at least one group which is capable of reacting with isocyanate groups, and
B) 50 to 95 % by weight of one or more polyurethanes with a number average molecular weight (Mn) of 30,000 to 500,000, in the form of an aqueous dispersion,
obtainable by the radical-initiated polymerisation of one or more polyurethane macromonomers with a content of carboxyl, phosphonic acid and/or sulphonic acid groups and lateral vinyl groups, in the presence of one or more unsaturated monomers which can be copolymerised with the polyurethane macromonomers.
wherein the percentages by weight of components A) and B) are each expressed with respect to the binder vehicle solids and add up to 100 % by weight.

2. An aqueous coating medium, containing a mixture according to claim 1 as a binder vehicle.

3. An aqueous coating medium according to claim 2, **characterised in that** it contains
8 to 20 % by weight of one or more of the binder vehicles according to claim 1,
60 to 90 % by weight water,
0 to 15 % by weight of one or more organic solvents,
0.1 to 15 % by weight of one or more effect pigments and/or colour-imparting pigments, and
neutralising agents for effecting a degree of neutralisation of the neutralisable groups of the binder vehicle of 40 to 120 %, and which optionally also contains customary additives and adjuvant substances.

4. A method of producing a multi-layer coating by the application of a single-colour or metallic colour base coat to a substrate which is optionally pretreated with one or more further coatings and the subsequent application of a clear lacquer coat, **characterised in that** a coating medium according to either one of claims 2 or 3 is used for the production of the base coat.

5. A method according to claim 4, **characterised in that** the clear lacquer coat is applied wet-into-wet to the base lacquer coat and is subsequently dried jointly therewith.

6. The use of the aqueous coating media according to claims 2 or 3 for the production of base coats in multi-layer lacquer structures.

7. A use according to claim 6 for the lacquer coating of motor vehicles or motor vehicle parts.

8. The use of the aqueous coating media according to claims 2 or 3 for the production of lacquer coatings for repair purposes.

## Revendications

1. Liant approprié à des produits de revêtement à base aqueuse, qui contient un mélange de
A) 5 à 60 % en poids d'un ou plusieurs polyuréthannes contenant des groupements carbonates, à une masse moléculaire moyenne, moyenne en nombre, Mn, de 70 000 à 50 000, à l'état de dispersion aqueuse, qu'on peut obtenir en faisant réagir
a) 10 à 40 % en poids d'un ou plusieurs polyisocyanates organiques aliphatiques, cycloaliphatiques et/ou aromatiques à au moins deux groupes isocyanate par molécule et à une masse moléculaire de 112 à 1000 et qui ne contiennent pas de groupes hydrophiles ou de groupes convertibles en groupes hydrophiles,
b) 40 à 80 % en poids d'un ou plusieurs composés organiques polyhydroxylés à haut poids moléculaire, consistant pour au moins 50 % en poids en un ou plu sieurs polyhydroxypolycarbonates et qui ne contiennent pas de groupes hydrophiles ou de groupes convertibles en groupes hydrophiles,
c) 0,2 à 18 % en poids d'un ou plusieurs composés à bas poids moléculaire contenant des groupes hydroxy et/ou amino, à une masse moléculaire de 60 à 400, qui ne contiennent pas de groupes hydrophiles ou de groupes convertibles en groupes hydrophiles,
d) 1 à 12 % en poids d'un ou plusieurs composés qui, avec au moins un groupe ionique ou au moins un groupe convertible en un groupe ionique, contiennent au moins un atome d'hydrogène réactif avec les groupes isocyanates, et
e) 0 à 8 % en poids d' un ou plusieurs composés hydrophiles non-ioniques contenant au moins un groupe isocyanate ou au moins un groupe réactif avec les groupes isocyanates, et
B) 50 à 95 % en poids d'un ou plusieurs polyuréthannes de masse moléculaire moyenne, moyenne en nombre, Mn, 30000 à 500 000, sous forme dune dispersion aqueuse,
qu'on obtient par polymérisation radicalaire d'un ou plusieurs macromonomères de polyuréthannes contenant des groupes carboxyle, acide phosphorique et/ou acide sulfonique et des groupes vinyle latéraux en présence d'un ou plusieurs monomères insaturés copolymérisables avec les macromonoméres de polyuréthannes,
les pourcentages indiqués pour les composants A) et B) se rapportant dans tous les cas aux matières solides du liant et se complétant à 100 % en poids.

2. Produit de revêtement aqueux contenant en tant que liant un mélange selon revendication 1.

3. Produit de revêtement aqueux selon revendication 2, **caractérisé en ce qu'**il contient
8 à 20 % en poids d'un ou plusieurs des liants selon revendication 1,
60 à 90 % en poids d'eau,
0 à 15 % en poids d'un ou plusieurs solvants organiques,
0,1 à 15 % en poids d'un ou plusieurs pigments à effet et/ou pigments colorés, des agents neutralisants pour parvenir à un taux de neutralisation de 40 à 120 % des groupes neutralisables du liant et le cas échéant des additifs et produits auxiliaires usuels.

4. Procédé pour l'application d'un revêtement à plusieurs couches par application dune couche de base de teinte unie ou métallique sur un support portant déjà le cas échéant un ou plusieurs revêtements préalables, suivie de l'application dune couche de vernis clair, **caractérisé en ce que**, pour l'application de la couche de base, an utilise un produit de revêtement selon l'une des revendications 2 ou 3.

5. Procédé selon revendication 4, **caractérisé en ce que** la couche de vernis clair est appliquée au mouillé-sur-mouillé sur la couche de peinture de base puis séchée avec celle-ci.

6. Utilisation des produits de revêtement selon revendication 2 ou 3 pour l'application des couches de base dans des applications de peinture à plusieurs couches.

7. , Utilisation selon revendication 6, à la peinture de véhicules ou de parties de véhicules.

8. Utilisation des produits de revêtement aqueux selon revendication 2 ou 3, pour des applications de peintures en réparation,
